# EUROPÄISCHE PATENTSCHRIFT

(11) **EP 1 810 767 B1**
(45) Veröffentlichungstag und Bekanntmachung des Hinweises auf die Patenterteilung: **09.07.2008**
(21) Anmeldenummer: 07001107.7
(22) Anmeldetag: 19.01.2007
(51) Int. Cl.: B23C 5/16, B23K 26/08, B23P 25/00, B23P 23/04

(54) **Kombinierte Vorrichtung zur Materialbearbeitung mit einem Fräser und einem Laser**
Combined apparatus for metal working with a milling cutter and a laser
Dispositif d'usinage de materiau combiné avec un fraiseur et un laser

(30) Priorität: 24.01.2006 DE 102006003682
(43) Veröffentlichungstag der Anmeldung: 25.07.2007
(73) Patentinhaber: JENOPTIK Automatisierungstechnik GmbH, 07745 Jena (DE)
(72) Erfinder: Jancsó, Alex, 07747 Jena (DE)
(74) Vertreter: Schaller, Renate

(56) Entgegenhaltungen:
- DE-A1- 10 241 339
- DE-A1- 19 910 880
- JP-A- 11 114 741
- KLOCKE F ET AL: "SCHWEISSEN UND LASERUNTERSTUETZTES FRAESEN MIT DEM DIODENLASER WELDING AND LASER ASSISTED MILLING USING A DIODE LASER" WERKSTATTSTECHNIK, SPRINGER VERLAG. BERLIN, DE, Bd. 90, Nr. 1/2, Januar 2000 (2000-01), Seiten 49-51, XP000912482 ISSN: 0340-4544

## Beschreibung

Die Erfindung betrifft eine Vorrichtung, mit der mittels eines Fräsers und eines Lasers Material von einem Werkstück partiell abgetragen werden kann.
Eine solche Vorrichtung ist gattungsgemäß aus der DE 199 10 880 A1 bekannt.

In der DE 41 13 633 A1 wird von einem Stand der Technik ausgegangen, bei dem Werkstücke, die zusätzlich zur Bearbeitung mittels Laser auch durch andere Bearbeitungsverfahren behandelt werden sollen, in unterschiedlichen Bearbeitungsvorrichtungen bearbeitet werden. Das Werkstück muss zwischen den Bearbeitungsvorrichtungen transportiert und dort jeweils zum Werkzeug ausgerichtet werden.

Mit dem Ziel, eine Bearbeitungsvorrichtung zu schaffen, mit der zusätzlich zur Laserbearbeitung weitere Bearbeitungsverfahren durchgeführt werden können, ohne dass das Werkstück transportiert oder umverlagert werden muss, wird in der DE 41 13 633 A1 vorgeschlagen, dass zwei Pinolen, von denen eine für den Laserkopf und die andere zur Befestigung eines weiteren Werkzeuges vorgesehen ist, mit einem gemeinsamen Antrieb in Verbindung stehen. Zur Durchführung von Bearbeitungsvorgängen kann somit die gleiche Steuerung benutzt werden.

Aus dem Kurzauszug zur japanischen Patentanmeldung JP 11114741 ist eine kombinierte Bearbeitungsanlage bekannt, in der alternativ ein Laser oder mechanische Werkzeuge, wie Bohrer und Fräser, insbesondere auch ein Schaftfräser, zur Werkstückbearbeitung eingesetzt werden. Um die unterschiedlichen Werkzeuge zum Einsatz zu bringen, werden der Bohrer oder der Fräser direkt an einer Spindel eines Spindelkopfes befestigt. Zur Nutzung des Lasers wird ein Modul an der Spindel befestigt, welches in dieser Position eine eingangsseitig eingekoppelte Laserstrahlung in koaxialer Richtung zur Spindel auf das Werkstück richtet. Indem alle Werkzeuge an derselben Spindel ausgerichtet werden, haben sie dieselbe Wirkungsrichtung gegenüber dem Werkstück.
Auch hier können die unterschiedlichen Bearbeitungsverfahren nur zeitlich nacheinander ausgeführt werden.

Auch aus der DE 199 10 880 A1 ist eine Werkzeugmaschine für die alternative Werkstückbearbeitung mit Laserstrahlung oder spanenden Werkzeugen bekannt. Ein Fräskopf und eine Laserstrahlungsquelle sind gemeinsam an einem Spindelstock befestigt, der auf einem X-Y-Tisch gelagert, eine horizontale Bewegung des Werkzeuges zum Werkstück ermöglicht. Die Laserstrahlungsquelle ist über einen Strahlführungskanal mit einem seitlich am Fräskopf angeordneten Laserkopf verbunden. Am Laserkopf ist ein Scannersystem befestigt, welches die Laserstrahlung fokussiert über die Werkstückoberfläche führt. Als eine mögliche Anwendung der Werkzeugmaschine wurde der schichtweise Materialabtrag genannt. Auch hier werden die einzelnen Bearbeitungsverfahren zeitlich nacheinander ausgeführt.

Es ist bekannt, dass Sonderwerkstoffe, wie zum Beispiel Keramiken oder bestimmte Stähle, vorteilhaft mit Laserunterstützung spanend abgetragen werden können. Dabei erwärmt eine Laserstrahlung das Werkstück partiell um die Schneidzone auf eine Temperatur, bei der sich das Material besser zerspanen lässt.
Beim laserunterstützten Drehen auf einer Drehbank, bei dem das Werkstück rotiert und ein Schneidwerkzeug mit nur einer Scheide lediglich zugestellt wird, wird die Laserstrahlung in Vorschubrichtung unmittelbar vor die Schneide auf das Werkstück gerichtet. D. h. der Laserstrahl behält während der Bearbeitung seine relative Lage zum Scheidwerkzeug unverändert bei und kann deshalb zum Schneidwerkzeug fixiert werden.

Beim laserunterstützen Fräsen stellt sich die Erwärmung der Schneidzone als schwieriger dar, da ein Fräser üblicherweise mehrere Schneidplatten aufweist, die auch zeitlich gemeinsam am Abtrag beteiligt sind.
Bei der in der DE 101 28 536 A1 offenbarten Fräsmaschine, die zum laserunterstütztem Fräsen einer dreidimensionalen Oberfläche, insbesondere einer Freiformfläche eingesetzt werden kann, ist eine Lasereinrichtung um einen Kugelfräser schwenkbar an einer verstellbaren Befestigung angebracht.

Es lässt sich wie folgt zusammenfassen.
Aus dem Stand der Technik sind grundsätzlich zwei verschieden Gruppen von Vorrichtungen (Werkzeugmaschinen) bekannt, die jeweils einen Laser und ein spanendes Werkzeug aufweisen.

Bei den Vorrichtungen der ersten Gruppe, die einen spanenden Abtrag durch Erwärmung mittels Laser unterstützen, kommen die Laserstrahlung und ein konventionelles spanabhebendes Werkzeug zeitgleich zum Einsatz, wobei die Laserstrahlung außerhalb des momentanen Bearbeitungsbereiches des spanabhebenden Werkzeuges, d. h. für einen Fräser außerhalb des äußeren Umfangs, auf das Werkstück auftrifft. Da der Laser und der Fräser benachbarte Bereiche bearbeiten, müssen der Laserkopf und der Fräser auch benachbart zueinander positioniert werden.

Bei den Vorrichtungen der zweiten Gruppe, bei denen alternativ Material mit Laser oder einem spanenden Werkzeug abgetragen wird, kommen die Laserstrahlung und ein konventionelles spanabhebendes Werkzeug zeitlich nacheinander an einem gleichen oder unterschiedlichen Bearbeitungsort zum Einsatz. Die Bearbeitungsverfahren laufen voneinander unbeeinflusst ab. Bei einem Wechsel des Bearbeitungsverfahrens für eine Bearbeitung am gleichen Bearbeitungsort, muss die Position der Werkzeuge zum Werkstück ausgetauscht werden. Eine Anwendung solcher Vorrichtungen ergibt sich für mehrschichtige Werkstücke, die partiell über wenigstens zwei Schichten aus einem unterschiedlichen Material abgetragen werden sollen, wobei wenigstens für das Material der ersten Schicht ein spanabhebendes Verfahren von Vorteil ist und sich das Material folgender Schichten vorteilhafter mit einer Schneidstrahlung abtragen lässt.

Die hierzu aus dem Stand der Technik bekannten und beschriebenen Vorrichtungen haben den Nachteil, dass erst nachdem das zu fräsende Abtragsvolumen abgetragen ist, das Lasern beginnen kann (zwei Arbeitsgänge), d. h. der gesamte Bearbeitungsbereich muss zweimal abgefahren werden. Gegenüber einem Verfahren bei dem das gewünschte Abtragsvolumen bei einem einmaligen Abfahren des gesamten Bearbeitungsbereich entfernt wird (ein Arbeitsgang), erhöht sich die Bearbeitungszeit (Zykluszeit).

Der Erfindung liegt die Aufgabe zugrunde, eine Vorrichtung zu schaffen, mit der mittels eines spanabhebenden Werkzeuges Nuten in ein Werkstück gefräst werden können und das Werkstück gleichzeitig entlang der Nuten mit einem Laserstrahl geschnitten oder perforiert werden kann.

Diese Aufgabe wird erfindungsgemäß mit den Merkmalen des Anspruches 1 gelöst. Vorteilhafte Ausführungen sind in den Unteransprüchen ausgeführt.

Die Erfindung soll nachfolgend anhand eines Ausführungsbeispiels näher erläutert werden.

Hierzu zeigt:
- Fig. 1: eine Prinzipskizze für eine erfindungsgemäße Vorrichtung
- Fig. 2: eine Ausführung eines Fräsers 3 mit gefasster Linse und Spülkanälen
- Fig. 3: eine Ausführung eines Fräsers 3 mit Aussparungen

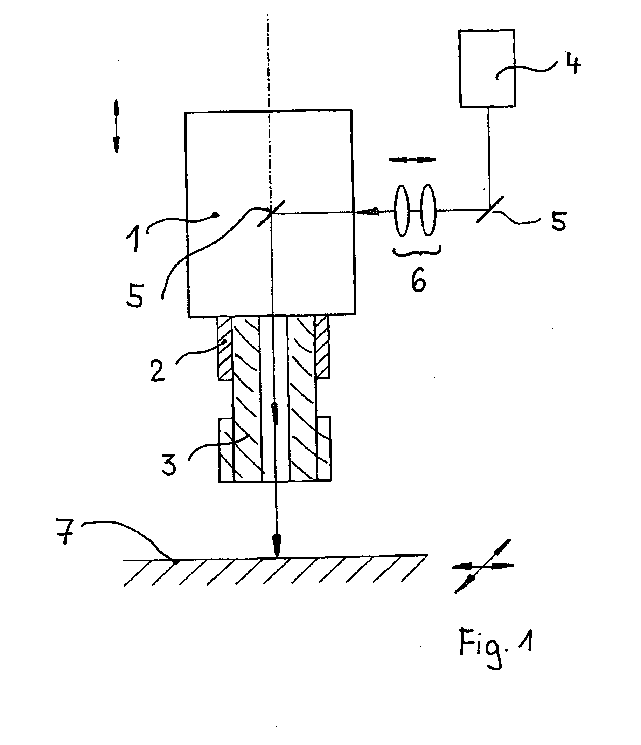

In Fig. 1 ist eine Fräseinheit 1 mit einer motorisch angetriebenen Arbeitsspindel 2 zur Aufnahme eines hohlen Fräsers 3, insbesondere eines Schaftfräsers, ein Laser 4 verbunden mit einem optischen Übertragungssystem, mit Umlenkelementen 5 zur Einkopplung der Laserstrahlung in den hohlen Fräser 3 und einer verstellbaren Fokussieroptik 6 sowie ein Arbeitstisch 7 zum Aufspannen des Werkzeuges dargestellt.
Nicht dargestellt sind vorhandene Führungen, Antriebs- und Steuereinheiten zur Erzeugung und Steuerung der Relativbewegung der Fräseinheit 1 und des Arbeitstisches 7 in drei Raumrichtungen, sowie zur Ansteuerung des Lasers 4 und der verstellbaren Fokussieroptik 6. Der Fräser 3 ist über eine Standardspannung, vorzugsweise ein Schnellspannfutter, mit der Arbeitsspindel 2 verbunden. Des Weiteren können Einheiten zur Spanabsaugung zur Schneidgaszuführung und - absaugung und zur Kühlung vorgesehen sein.

Die Vorrichtung unterscheidet sich gegenüber gattungsgleichen Vorrichtungen aus dem Stand der Technik dadurch, dass die Laserstrahlung in die Fräseinheit 1 und über die ebenfalls hohl ausgeführte Arbeitsspindel 2, durch einen hohlen Fräser 3 koaxial zur Fräserachse auf das Werkstück gerichtet wird. Der Bündeldurchmesser der Laserstrahlung im Durchtrittsbereich durch den Fräser 3 und der freie Durchmesser des Fräsers 3 müssen so aufeinander abgestimmt werden, so dass kein Randbeschnitt durch den Fräser 3 entsteht, also das Strahlenbündel einen freien Durchtritt hat. Der Fräser 3 weist entsprechend einen durchgehenden Kanal mit einem freien Durchmesser um die Schaftachse auf, der größer ist als der Bündeldurchmesser der Laserstrahlung in diesem Bereich.

In Abhängigkeit von der Berechnung des optische Übertragungssystems, hierunter sollen alle optisch wirksamen Elemente zwischen dem Laser 4 und dem Werkstück verstanden werden, kann es notwendig sein, die zum Werkstück hin letzte Linse (Schneidlinse) im Fräser 3 selbst zu platzieren. Zu diesem Zwecke kann der Fräser 3 beispielsweise seitens des Aufnahmeschaftes größer aufgebohrt werden, bis auf eine Tiefe bestimmt durch die vorgesehene Position der Schneidlinse, sodass die Linse an den entstehenden Bund angelegt dort bevorzugt fixiert werden kann. Anstelle der Schneidlinse könnte auch ein Abschlussglas stehen, um eine Verschmutzung der Fräseinheit 1 über dem Kanal zu verhindern.
Im Grundkörper des Fräsers 3 können Kühlkanäle ausgebildet sein, um die Schneidlinse bei größeren Laserleistungen kühlen zu können.
Durch die zwingend hohle Ausführung der Arbeitsspindel 2, kann auch sie als Fassung von optischen Elementen, wie auch der Schneidlinse dienen.

Das optische Übertragungssystem wurde in Fig. 1 durch eine verstellbare Fokussieroptik 6, über die der Abstand des Fokus von der Stirnseite des Fräsers 3 variiert werden kann und Umlenkelemente 5 symbolisch dargestellt. Es ist dem Fachmann klar, dass zusätzlich abbildende oder umlenkende Elemente, z. B. ein Teleskop zum Übertragungssystem gehören können, um die Laserstrahlung schlankgebündelt und scharf fokussiert durch den Kanal im Fräser 3 auf das Werkstück bzw. Schichten des Werkstückes zu richten oder aber die Fokussieroptik 6 nicht verstellbar ist.

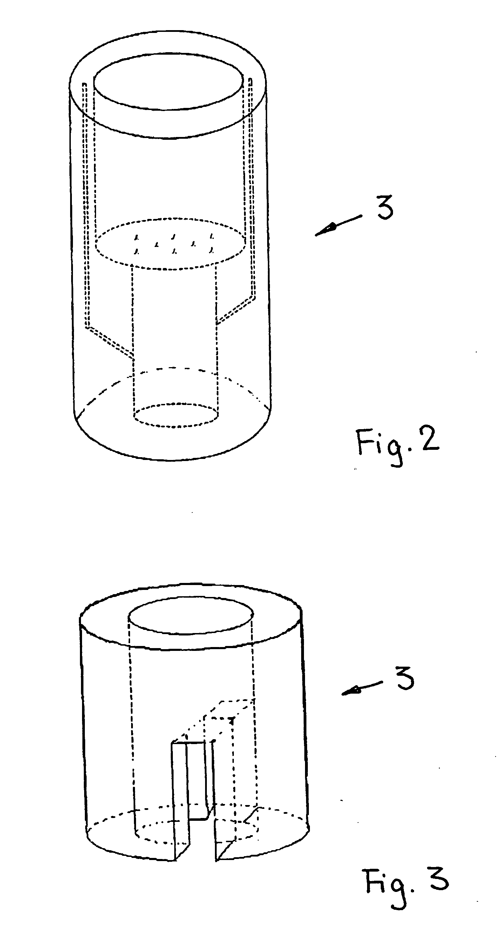

Um die Verschmutzung der Schneidlinse bzw. des Abschlussglases durch Verbrennungsrückstände zu verhindern, sind im Fräser 3 vorteilhaft Spülkanäle vorgesehen. Die Austrittsöffnungen der Spülkanäle befinden sich unmittelbar unterhalb der Schneidlinse bzw. des Abschlussglases, wodurch sowohl deren werkstückseitige Oberfläche abgeblasen werden kann, als auch Späne aus dem Kanal des Fräsers 3 ausgetrieben und eindringende Verbrennungsgase ausgeblasen werden können. Die Spülluft kann außerdem auch zur Kühlung der Schneidlinse bzw. des Abschlussglases dienen. Das Spülen findet insbesondere während der Bearbeitung statt. In Fig. 2 ist eine solche Ausführung dargestellt, wobei auf die Darstellung der Schneidklingen verzichtet wurde. Die Ausführung der Schneidklingen und deren Anordnung am Grundkörper des Fräsers 3 sind für die Erfindung nicht wesentlich, vielmehr ist hier jegliche denkbare Ausführung gemäß herkömmlichen Schaftfräsern denkbar.

Damit die durch die Laserbearbeitung entstehenden Verbrennungsgase besser entweichen können, sind zwischen den Umfangsschneiden stirnseitig des Fräsers 3 Schlitze (Aussparungen) eingebracht. Vorteilhaft erstrecken diese sich in der Tiefe vom Kernumfang des Fräsers 3 bis in den Kanal hinein und in der Breite möglichst über den Abstand der Schneidklingen. In Fig. 3 ist eine solche Ausführung dargestellt, wobei hier nur der Grundkörper des Fräsers 3 ohne jegliche Schneidklingen zu sehen ist.

Es ist dem Fachmann klar, dass die Ausführung des Fräsers 3 mit Kühlkanälen, Spülkanälen und Freimachungen keine alternativen Ausführungen sind, wie es aus der Zeichnung her scheint, sondern in Kombination ausgeführt werden können.

Durch die hohle Ausführung des Fräsers 3 können an der Stirnseite nur begrenzt Stirnschneiden ausgebildet sein, die nicht in den freien Durchmesser des Fräsers 3 ragen dürfen.

Bei einem senkrechten Einstechen des Fräsers 3 in das Werkstück kann daher das Materialvolumen unterhalb des Kanals nicht direkt abgetragen werden. Um dieses Problem zu lösen, werden verschiedene Lösungen vorgeschlagen.

Wie bei der Verwendung von Fräsern mit nur Umfangsschneiden häufig angewandt, kann der Einstich mit einem herkömmlichen Bohrnutenfräser erfolgen, was allerdings den Zeitvorteil, der durch die erfindungsgemäße Integration der Laserstrahlung in den Fräser 3 gewonnen wird, wieder zunichte machen würde.

Stattdessen könnte der Fräser 3 geneigt in das Material einstechen und bei der gewünschten Frästiefe angekommen, in seine senkrechte Arbeitsposition aufgerichtet werden. Über diese Strecke, in denen der Fräser 3 nicht in senkrechter Arbeitsposition in das Material einsticht, entsteht jedoch kein vollständiger Abtrag. Dieser könnte durch einen Rücklauf des Fräsers 3 entgegen der vorgesehenen Fräsrichtung beseitigt werden.

Auch könnte der Fräser 3 mit inneren Schneiden ausgebildet werden. Bevorzugt haben diese eine wirksame Länge über den Grundkörper des Fräsers 3, alsdie Umfangsschneiden. Der Fräser 3 kann dann nach Erreichen der Eindringtiefe mit Beginn der Vorschubbewegung in Fräsrichtung das Restmaterial abtragen.

Besonders vorteilhaft wird jedoch dieses Restmaterial bereits während des Einstechens durch die Laserstrahlung verdampft. Zu diesem Zweck wird über die Fokussieroptik 6 die Laserstrahlung derart defokussiert, dass sie einen nur geringfügig kleineren Durchmesser hat als der Kanal. Die Laserparameter wie Laserleistung, Pulsfrequenz und Pulsdauer werden so gewählt, dass der Materialabtrag im Inneren des Fräsers 3 nicht schneller erfolgt, als die Zerspanung des Materials durch den Fräser 3. Sobald der Fräser 3 in der gewünschten Einstechtiefe angelangt ist, wird der Fokus der Laserstrahlung auf einen für die Bearbeitung des unterhalb des Fräsers 3 verbleibenden Materials, geeigneten Abstand zur Stirnfläche eingestellt. Der Fräser 3 wird nun relativ zum Werkstück in der gewünschten Vorschubrichtung bewegt. Es entsteht eine Nut konstanter Tiefe. Gleichzeitig wird in den Boden dieser Nut gelasert. Es kann mit dem Laser 4 ein kontinuierlicher Schnitt ausgeführt werden oder es können Sacklöcher oder Mikroperforationslöcher unterschiedlicher Tiefe und unterschiedlichen Abstandes geschnitten werden.

Die Erfindung ist besonders vorteilhaft anwendbar, um in einem mehrschichtigen Werkstück, wie einer Airbagabdeckung, wenigstens in eine erste Schicht Nuten zu fräsen, durch die hindurch in die folgenden Schichten Perforationen gelasert werden sollen.
Durch die Überlagerung der beiden Bearbeitungsverfahren wird neben dem Zeitgewinn auch vermieden, dass Späne in den Strahlungsbereich gelangen und die Laserbearbeitung stören.

Die Grundidee der Erfindung, eine Schneidstrahlung in einen Fräser 3 zu integrieren, kann auch für das Wasserstrahlschneiden angewendet werden.

### Bezugszeichenliste

- 1: Fräseinheit
- 2: Arbeitsspindel
- 3: Fräser
- 4: Laser
- 5: Umlenkelement
- 6: Fokussieroptik
- 7: Arbeitstisch

## Patentansprüche

1. Vorrichtung zur Materialbearbeitung mit einer Fräseinheit (1), einem Fräser (3) und einer motorisch angetriebenen Arbeitsspindel (2) zur Aufnahme des Fräsers (3), sowie einem Laser (4), verbunden mit einem optischen Übertragungssystem und einem Arbeitstisch (7) zum Aufspannen des Werkstückes, sowie Antriebs- und Steuereinheiten zur Erzeugung und Steuerung der Relativbewegung der Fräseinheit (1) und des Arbeitstisches (7) in drei Raumrichtungen, sowie zur Ansteuerung des Lasers (4) **dadurch gekennzeichnet,**
**dass** in dem Fräser (3) koaxial zur Fräserachse ein hohler Kanal vorhanden ist und das optische Übertragungssystem die Laserstrahlung koaxial in den Kanal einkoppelt.

2. Vorrichtung nach Anspruch 1, **dadurch gekennzeichnet,**
**dass** das optische Übertragungssystem eine verstellbare Fokussieroptik (6) umfasst, mit der der Abstand des Fokus der Laserstrahlung zur Stirnseite des Fräsers (3) variierbar ist.

3. Vorrichtung nach Anspruch 1 oder 2, **dadurch gekennzeichnet,**
**dass** der Fräser (3) zwischen seinen Umfangsschneiden Aussparungen aufweist, über die die bei der Laserbearbeitung entstehenden Verbrennungsgase besser entweichen können.

4. Vorrichtung nach einem der Ansprüche 1 bis 3, **dadurch gekennzeichnet,**
**dass** im Kanal des Fräsers (3) eine Schneidlinse oder ein Abschlussglas eingepasst ist.

5. Vorrichtung nach Anspruch 4, **dadurch gekennzeichnet,**
**dass** im Fräser (3) Spülkanäle vorhanden sind, deren Austrittsöffnungen unmittelbar unterhalb der Schneidlinse bzw. des Abschlussglases in den Kanal münden.

## Claims

1. A material machining device comprising a milling unit (1), a milling cutter (3) and a motor-driven work spindle (2) for receiving the milling cutter (3), as well as a laser (4) connected to an optical transmission system and to a work table (7) for clamping the workpiece, as well as driving and controlling units for generating and controlling the relative movement of the milling unit (1) and the work table (7) in three spatial directions, as well as for controlling the laser (4), **characterized in that** a hollow channel extending coaxially to the mill axis is present in the milling cutter (3) and the optical transmission system coaxially couples the laser radiation into the channel.

2. Device according to claim 1, **characterized in that** the optical transmission system comprises adjustable focusing optics (6) by which the distance between the focus of the laser radiation and the face of the milling cutter (3) can be varied.

3. Device according to claim 1 or 2, **characterized in that** the milling cutter (3) comprises recesses between its circumferential cutting edges to facilitate the escape of combustion gases generated during the laser machining.

4. Device according to any one of claims 1 to 3, **characterized in that** a cutting lens or a cover glass is fitted into the channel of the milling cutter (3).

5. Device according to claim 4, **characterized in that** flushing channels are present in the milling cutter (3), the outlet openings of said flushing channels opening into the channel directly below the cutting lens or cover glass.

## Revendications

1. Dispositif d'usinage de matériaux, comprenant une unité de fraisage (1), une fraise (3) et un arbre de travail (2) entrainé par moteur et recevant la fraise (3), ainsi qu'un laser (4) associé à un système de transmission optique et à une table de travail (7) pour le serrage de la pièce à usiner, ainsi que des unités d'entrainement et de commande destinées à engendrer et commander le mouvement relatif de l'unité de fraisage (1) et de la table de travail (7) en trois directions spatiales, ainsi qu'à commander ledit laser (4), **caractérisé en ce que** la fraise (3) présente à son intérieur un canal creux s'étendant de manière coaxiale par rapport à l'axe de la fraise et que le système de transmission optique introduit le rayonnement laser dans ledit canal de manière coaxiale.

2. Dispositif selon la revendication 1, **caractérisé en ce que** le système de transmission optique comprend une optique de focalisation (6) adaptable, permettant de varier la distance entre le point focal du rayonnement laser et la face de la fraise (3).

3. Dispositif selon la revendication 1 ou 2, **caractérisé en ce que** la fraise (3) comporte des évidements entre ses lames circonférentielles, lesdits évidements permettant un échappement amélioré des gaz de combustion produits lors de l'usinage laser.

4. Dispositif selon l'une quelconque des revendications 1 à 3, **caractérisé en ce qu'**une lentille de coupe ou une verre de fermeture est emboîtée dans le canal de la fraise (3).

5. Dispositif selon la revendication 4, **caractérisé en ce que** la fraise (3) présente des canaux de rinçage dont les orifices de sortie débouchent dans le canal directement en-dessous de la lentille de coupe ou de la verre de fermeture.
